# EUROPÄISCHE PATENTANMELDUNG

(11) **EP 1 041 504 A2**
(43) Veröffentlichungstag der Anmeldung: **04.10.2000**
(21) Anmeldenummer: 00106755.2
(22) Anmeldetag: 29.03.2000
(51) Int. Cl.: G06K 7/08, B65F 3/00

(54) **Müllsackidentifikationssystem**

(30) Priorität: 30.03.1999 DE 29905841 U
(71) Anmelder: MOBA-Mobile Automation GmbH, 65604 Elz (DE)
(72) Erfinder: Schmidt, Andreas, 01309 Dresden (DE); Süss, Matthias, 01309 Dresden (DE)
(74) Vertreter: Schoppe, Fritz, Dipl.-Ing.

(57) **Zusammenfassung**

Ein Müllsackidentifikationssystem für ein Müllfahrzeug weist eine Einwurföffnung (104) auf, durch die Müllsäcke in das Müllfahrzeug einfüllbar sind. Das Müllsackidentifikationssystem hat einen Transponder (108), der an einem Müllsack (106) angeordnet ist, eine Antennenanordnung, die Signale von dem auf dem Müllsack (106) angeordneten Transponder (108) empfängt, und eine Erfassungseinrichtung (114). Die Antennenanordnung hat eine erste Teilschleife (112), die eine erste Fläche im wesentlichen umschließt und ein erstes und ein zweites Ende hat, und eine zweite Teilschleife (114), die eine zweite Fläche im wesentlichen umschließt und ein erstes und ein zweites Ende hat. Die beiden Enden der ersten und der zweiten Teilschleife (112, 114) sind derart miteinander verbunden, daß die beiden Teilschleifen zusammen eine einzige geschlossene Windung bilden, um beim Einwurf eines Müllsacks (106) durch die Einwurföffnung (104) in das Müllfahrzeug den Transponder (108) an dem Müllsack (106) auszulesen.

## Beschreibung

Die vorliegende Erfindung bezieht sich auf ein Müllsackidentifikationssystem, und insbesondere auf ein Müllsackidentifikationssystem für ein Müllfahrzeug.

Bereits seit einiger Zeit werden Identifikationssysteme zur Identifikation von Müllbehältern eingesetzt, um mittels dieser Technologie die Abrechnung der Müllabfuhrgebühren in Abhängigkeit von dem Gewicht oder der Leerungshäufigkeit eines mit einem Transponder ausgerüsteten Müllbehälters zu ermöglichen.

Derartige Identifikationssysteme dienen dazu, die von einem Transponder übermittelten Daten, z.B. eine Identifikationsnummer, die einem Haushalt zugeordnet ist, in einer Datenerfassungseinheit zu speichern und zu verarbeiten.

Die Identifikation des Müllbehälters erfolgt üblicherweise derart, daß während eines Entleerungsvorganges eine definierte räumliche Zuordnung zwischen Transponder und Antenne erforderlich ist, wobei in diesem Fall die Lage des Transponders bezüglich der Antenne so gewählt sein muß, daß ein sicherer Lese- oder Erkennungsbereich erreicht wird, so daß die gespeicherten Daten sicher erfaßt werden können.

Diese bekannten Systeme sind dahingehend nachteilhaft, daß es erforderlich ist, daß der Müllbehälter eine definierte Lage bezüglich der Antenne einnehmen muß.

Zur Lösung dieser Problematik wurden im Stand der Technik bereits Möglichkeiten vorgeschlagen, mittels denen eine Entleerung des Müllbehälters auf einfache Art und Weise sichergestellt wird, ohne daß es auf eine vorbestimmte Lage desselben beim Auslegen ankommt.

So beschreibt beispielsweise die DE 197 08 204 A1 ein Behälteridentifikationssystem für ein Seitenladermüllfahrzeug mit Greifarmen, bei dem an einem Greifarm eine beweglich angeordnete Antennenanordnung vorgesehen ist, die beim Ergreifen eines Müllbehälters mittels des Greifarms zu dem Müllbehälter bewegt wird, so daß eine sichere Auslesung der Transponderdaten möglich ist.

Die DE 197 08 235 A1 beschreibt ein Behälteridentifikationssystem für ein Seitenladermüllfahrzeug, bei dem sich eine Antenne vollständig um eine Einfüllöffnung herum erstreckt, so daß unabhängig von der Lage des Müllbehälters das Auslesen der Transponderdaten sichergestellt ist.

Die oben beschriebenen Lösungsvorschläge aus dem Stand der Technik arbeiten gut für Müllbehälter in der Form von Mülltonnen oder solcher Behälter, bei denen lediglich deren Inhalt in das Müllfahrzeug entladen wird. Nachdem diese Behälter lediglich entleert werden, d.h. deren Inhalt wird in das Müllfahrzeug eingefüllt, weisen bekannte Müllfahrzeuge entsprechend dimensionierte Öffnungen auf, an welche die entsprechenden Müllbehälter herangeführt und gekippt werden, so daß sich deren Inhalt in das Müllfahrzeug ergießt. Durch diese Anordnung ist während des Einfüllvorgangs eine definierte Lage des Müllbehälters zum Müllfahrzeug festgelegt, so daß durch eine entsprechende Anordnung der Antenne ein korrekter Abstand zwischen dem Transponder und der Antenne festgelegt werden kann, um ein sicheres Auslesen der Transponderdaten zu gewährleisten.

Werden jedoch anstelle der Müllbehälter sogenannte Müllsäcke verwendet, sind die oben beschriebenen Systeme nicht einsetzbar und deren Verwendung bringt erhebliche Nachteile mit sich. Müllfahrzeuge, die zum Abtransport von Müllsäcken ausgelegt sind, weisen entsprechende Öffnungen auf, durch die die Müllwerker die Müllsäcke in das Innere des Müllfahrzeugs einwerfen. Daher müssen die entsprechenden Öffnungen ausreichend groß dimensioniert sein. Da die einzelnen Säcke in beliebiger Ausrichtung eingeworfen werden, fehlt es an einer festgelegte örtlichen Beziehung zwischen dem Müllsack und dem Müllfahrzeug. Daher kann beim Einsatz von Müllsäcken mit einem Transponder nicht sichergestellt werden, daß eine Auslesung der Transponderdaten erfolgt, da der erforderliche Leseabstand nicht sicher eingehalten ist.

Ausgehend von diesem Stand der Technik liegt der vorliegenden Erfindung die Aufgabe zugrunde, ein verbessertes Müllsackidentifikationssystem zu schaffen, welches die sichere Erfassung von Daten auf einem Transponder auf einem Müllsack ermöglicht.

Diese Aufgabe wird durch ein Müllsackidentifikationssystem gemäß Anspruch 1 gelöst.

Die vorliegende Erfindung schafft ein Müllsackidentifikationssystem für ein Müllfahrzeug, das eine Einwurföffnung aufweist, durch die Müllsäcke in das Müllfahrzeug einfüllbar sind, mit einem Transponder, der an einem Müllsack angeordnet ist, einer Antennenanordnung, die Signale von dem auf dem Müllsack angeordneten Transponder empfängt, und einer Erfassungseinrichtung, die aufgrund der durch die Antennenanordnung empfangenen Signale Daten erfaßt, die in dem Transponder gespeichert sind, wobei die Antennenanordnung eine erste Teilschleife, die eine erste Fläche im wesentlichen umschließt und ein erstes und ein zweites Ende hat, eine zweite Teilschleife, die eine zweite Fläche im wesentlichen umschließt und ein erstes und ein zweites Ende hat, aufweist, und wobei die beiden ersten Enden der ersten und der zweiten Teilschleife miteinander verbunden sind, und wobei die zweiten Enden der ersten und der zweiten Teilschleife miteinander verbunden sind, derart, daß die beiden Teilschleifen zusammen eine einzige geschlossene Windung bilden, um beim Einwurf eines Müllsacks durch die Einwurföffnung in das Müllfahrzeug den Transponder an dem Müllsack auszulesen.

Der Vorteil der vorliegenden Erfindung besteht darin, daß auch Müllsäcke, die per Hand in eine vorgesehene Öffnung am Müllfahrzeug geworfen werden, bei deren Abtransport identifiziert werden, indem der auf den Müllsäcken angeordnete Transponder omnidirektional ausgelesen wird.

Bevorzugte Ausführungsbeispiele der vorliegenden Erfindung sind in den Unteransprüchen definiert.

Ein bevorzugtes Ausführungsbeispiel der vorliegenden Erfindung wird nachfolgend unter Bezugnahme auf die beiliegenden Zeichnungen näher erläutert. Es zeigen:
- Fig. 1: eine schematische Darstellung des erfindungsgemäßen Müllsackidentifikationssystems;
- Fig. 2: eine schematische Darstellung der Antennenanordnung; und
- Fig. 3: eine Schnittdarstellung der Seitenwand eines Müllfahrzeuges, die die Öffnung und die Position der Antennenelemente zeigt.

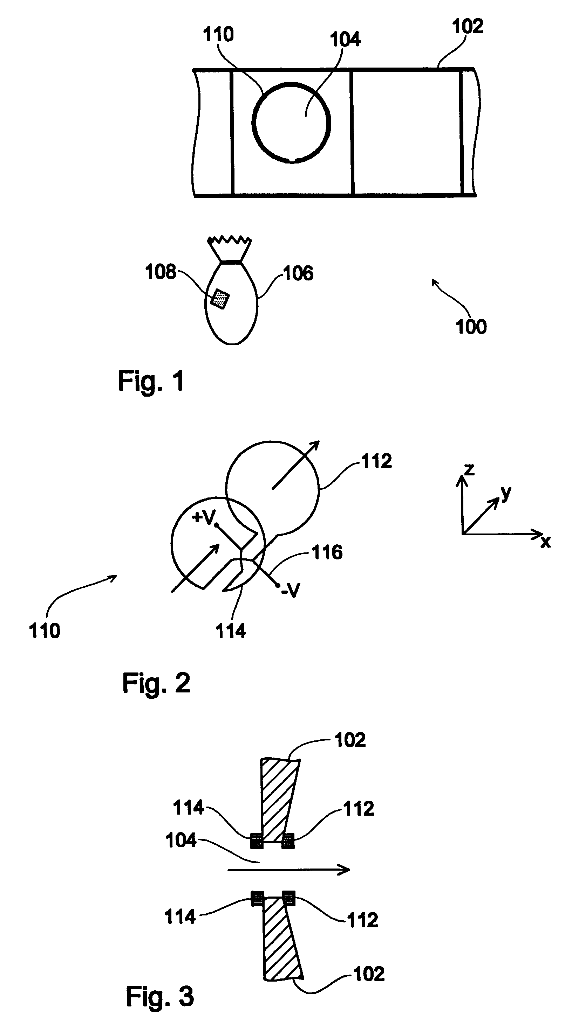

In Fig. 1 ist das erfindungsgemäße Müllsackidentifikationssystem schematisch dargestellt, und ist in seiner Gesamtheit mit dem Bezugszeichen 100 bezeichnet.

Schematisch ist ein Abschnitt 102 eines Müllfahrzeugs dargestellt, z.B. eine Seitenwand. In dem Abschnitt 102 des Müllfahrzeugs ist eine Einwurföffnung 104 vorgesehen, durch welche Müllsäcke 106 in das Innere des Müllfahrzeugs eingeworfen werden können.

Ein Transponder 108 ist auf dem Müllsack 106 angeordnet und enthält die erforderlichen Identifikationsdaten, die beispielsweise zur Abrechnung der Müllentsorgung herangezogen werden.

Benachbart zu der Öffnung 104 ist bei dem in Fig. 1 gezeigten Beispiel eine Antennenanordnung 110 vorgesehen, die beim Einwurf des Müllsacks 106 durch die Öffnung 104 Daten bzw. Signale von dem Transponder 108 empfangen und diese an eine (nicht dargestellte) Erfassungseinrichtung weitergibt. Die Antennenanordnung erstreckt sich um die Öffnung 104 herum.

Bei dem in Fig. 1 dargestellten Transponder 108, der auf einem Müllsack 106 vorgesehen ist, handelt es sich vorzugsweise um sogenannte Einwegtransponder, also solche Transponder, welche lediglich nur einmal verwendet werden, die bevorzugterweise als "Label" oder in der Form eines Etiketts auf die Müllsäcke 106 aufgeklebt werden, wobei entweder vor oder nach dem Aufkleben die entsprechenden Daten für die Abrechnung gespeichert werden.

Fig. 2 zeigt eine schematische Darstellung der Antennenanordnung 110 aus Fig. 1. Die Antennenanordnung 110 weist eine erste Teilschleife 112, eine zweite Teilschleife 114 sowie eine einzige Speiseeinrichtung 116 auf. Rechts in Fig. 2 ist das Bezugskoordinatensystem angedeutet. Damit wird deutlich, daß bei der gezeigten Darstellung die erste Teilschleife 112 in der xz-Ebene angeordnet ist, und zwar bei einer ersten y-Koordinate. Analog dazu befindet sich die zweite Teilschleife 114 ebenfalls in einer xz-Ebene, jedoch bei einer anderen y-Koordinate als die erste Ebene. Aus Fig. 1 ist ferner zu sehen, daß die beiden Ebenen, in denen die beiden Teilschleifen liegen, im wesentlichen parallel zueinander sind. Die beiden Teilschleifen können auch derart bezüglich der yz-Ebene gekippt sein, daß sich die beiden Ebenen, die durch die beiden Teilschleifen 112 und 114 definiert sind, in einem spitzen Winkel schneiden.

Die beiden Teilschleifen müssen nicht nur ebene Rechtecke oder ebene kreisförmige Rahmen sein, sondern können auch beliebig geformte konvexe und/oder konkave Flächen definieren. Die erste Teilschleife und die zweite Teilschleife müssen lediglich derart zueinander positioniert sein, daß ebene Flächen, die an beliebige konvexe oder konkave durch die erste und die zweite Teilschleife definierte Flächen angenähert sind, zueinander parallel sind oder sich in einem spitzen Winkel schneiden. Nur damit wird zwischen den beiden beliebig geformten Teilschleifen 112, 114, die beliebig einander gegenüberliegend angeordnet sind, ein gedachtes Volumen definiert, durch das der zu identifizierende Transponder 108 des einzuwerfenden Müllsacks 106 hindurchbewegt werden können.

In Fig. 2 ist ferner zu sehen, daß die beiden Teilschleifen 112, 114 durch Überkreuzung der Leiter in der Nähe des Speisungspunkts so gespeist werden, daß sich eine gegensinnige Stromflußrichtung in den beiden Teilschleifen ergibt. Damit wird auf vorteilhafte Art und Weise eine besondere Inhomogenität zwischen den beiden Teilschleifen 112, 114, also in dem gedachten Volumen, erzeugt. Alternativ könnte jedoch die Überkreuzung nicht vorhanden sein, derart, daß eine gleichsinnige Stromflußrichtung zwischen den beiden durch eine einzige Stelle gespeisten Teilschleifen 112, 114 vorhanden ist. Auch hier wird der Vorteil erreicht, daß die Fläche, die durch die Teilschleifen 112, 114 umschlossen wird, erhöht werden kann, ohne daß die Induktivität der Antennenanordnung so stark steigt, wie wenn eine analoge Antennenanordnung, die eine einzige Rahmenantenne aufweist, entsprechend dimensioniert wird, um die gleiche Fläche zu umschließen. Damit kann die Induktivität der Antennenanordnung in Grenzen gehalten werden, was dazu führt, daß relativ große Schaltungskapazitäten eingesetzt werden können, um einen von Streukapazitäten möglichst unabhängigen Antennenbetrieb erhalten zu können.

Durch das "Durchtauchen" (siehe Pfeil) der Müllsäcke 106 durch die Schleifen befinden sich die darauf angebrachten Transponder 108 in dem Nahbereich der Antenne, d. h. die Leseabstände sind geringer als bei einer vergleichbare Antennenanordnung mit einzelnen Antennenelementen. Damit werden Systeme mit geringeren Reichweiten und damit auch geringeren Sendeleistungen sowohl auf Seiten der Antenne als auch auf Seiten der Transponder unterstützt. Durch die mögliche Neigung der beiden Teilschleifen können in einer Ebene beliebig ausgerichtete Transponder zuverlässig gelesen werden. Wenn zusätzlich die gegensinnige Feldorientierung gewählt wird, wie es bei der Antennenanordnung von Fig. 2 dargestellt ist, kann auch die dritte Orientierungsrichtung von Transpondern, also eine Ausrichtung senkrecht zur Transportrichtung, zuverlässig verarbeitet werden.

Ein weiterer Vorteil der Antennenanordnung besteht darin, daß die Geometrie derselben an die Abmessungen der Müllsäcke angepaßt werden kann. Hierdurch wird sichergestellt, daß auch Müllsäcke, die per Hand in eine vorgesehene Öffnung am Müllfahrzeug geworfen werden, bei deren Abtransport identifiziert werden, indem der auf den Müllsäcken angeordnete Transponder omnidirektional ausgelesen wird.

In Fig. 3 ist eine Position der Antennenanordnung 110 bzgl. der Öffnung 104 in dem Abschnitt 102 eines Müllfahrzeugs dargestellt. Die Einwurfrichtung der Müllsäcke ist durch den Pfeil angedeutet. Die erste Teilschleife 112 ist benachbart zu der Öffnung 104 im Inneren des Fahrzeugs angeordnet, und die Teilschleife 114 ist benachbart zu der Öffnung 104 außerhalb des Fahrzeugs angeordnet.

Wie aus der obigen Beschreibung zu erkennen ist, ermöglicht die vorliegende Erfindung die sichere Identifikation von Säcken, die per Hand in eine vorgesehene Öffnung 104 an einem Müllfahrzeug eingeworfen werden. Die erfindungsgemäße Identifikationstechnik ist hierbei in der Lage, omnidirektional den Transponder 108 zu lesen, was erforderlich ist, da im Gegensatz zur Identifikation von Mülltonnen, die Plazierung Transponder-Antenne nicht vordefinierbar ist.

Bei den verwendeten Transpondern, handelt es sich beispielsweise um sogenannten Label-Transponder, also kostengünstige Transponder, die lediglich einmal Verwendung finden.

## Patentansprüche

1. Müllsackidentifikationssystem für ein Müllfahrzeug, das eine Einwurföffnung (104) aufweist, durch die Müllsäcke in das Müllfahrzeug einfüllbar sind, mit
einem Transponder (108), der an einem Müllsack (106) angeordnet ist;
einer Antennenanordnung, die Signale von dem auf dem Müllsack (106) angeordneten Transponder (108) empfängt; und
einer Erfassungseinrichtung (114), die aufgrund der durch die Antennenanordnung empfangenen Signale Daten erfaßt, die in dem Transponder (108) gespeichert sind;
wobei die Antennenanordnung eine erste Teilschleife (112), die eine erste Fläche im wesentlichen umschließt und ein erstes und ein zweites Ende hat, eine zweite Teilschleife (114), die eine zweite Fläche im wesentlichen umschließt und ein erstes und ein zweites Ende hat, aufweist; und
wobei die beiden ersten Enden der ersten und der zweiten Teilschleife (112, 114) miteinander verbunden sind, und wobei die zweiten Enden der ersten und der zweiten Teilschleife miteinander verbunden sind, derart, daß die beiden Teilschleifen zusammen eine einzige geschlossene Windung bilden, um beim Einwurf eines Müllsacks (106) durch die Einwurföffnung (104) in das Müllfahrzeug den Transponder (108) an dem Müllsack (106) auszulesen.

2. Müllsackidentifikationssystem nach Anspruch 1, bei der die Antennenanordnung ferner folgende Merkmale aufweist:
einer einzigen Speisungseinrichtung (116) zum Anlegen einer Spannung (+V, -V) zwischen den verbundenen ersten Enden und den verbundenen zweiten Enden,
wobei die erste und die zweiten Teilschleife (112, 114) derart zueinander positioniert sind, daß die erste und die zweite Fläche einander gegenüberliegend angeordnet sind und eine an die erste Fläche und eine an die zweite Fläche angenäherte ebene Fläche parallel sind oder sich in einem spitzen Winkel schneiden.

3. Müllsackidentifikationssystem nach Anspruch 1 oder 2, bei der der Transponder (108) zur einmaligen Verwendung ausgelegt ist und in der Form eines Etiketts auf den Müllsack (106) aufgeklebt ist.
